# EUROPÄISCHE PATENTSCHRIFT

(11) **EP 2 226 153 B1**
(45) Veröffentlichungstag und Bekanntmachung des Hinweises auf die Patenterteilung: **16.11.2011**
(21) Anmeldenummer: 10155521.7
(22) Anmeldetag: 04.03.2010
(51) Int. Cl.: B23Q 1/01, B23Q 11/00

(54) **Drehmaschine zum Herstellen von Brillengläsern aus Kunststoff**
Rotating machine for manufacturing spectacles made of plastic
Machine rotative destinée à la fabrication de verres solaires en matière synthétique

(30) Priorität: 04.03.2009 DE 102009011194
(43) Veröffentlichungstag der Anmeldung: 08.09.2010
(73) Patentinhaber: Schneider GmbH & Co. KG, 35239 Steffenberg (DE)
(72) Erfinder: Schneider, Gunter, 35037 Marburg (DE); Buchenauer, Helwig, 35232 Dautphetal-Buchenau (DE); Börner, Ulf, 35041 Marburg (DE); Krämer, Klaus, 35232 Dautphetal-Friedensdorf (DE)
(74) Vertreter: Thews, Gustav

(56) Entgegenhaltungen:
- EP-A1- 1 719 582
- DE-A1-102005 021 638

## Beschreibung

Die Erfindung bezieht sich auf eine **Brillenglas-**Drehmaschine zum Herstellen von nicht rotationssymmetrischen Oberflächen von Brillengläsern aus Kunststoff, aufweisend eine Aufstandsebene, ein Maschinenbett, vorzugsweise aus Gusseisen mit einer Breite b1 und einer Masse m1, einen Linearmotor mit einem eine Drehwerkzeugaufnahme aufweisenden Aktor mit einer Oszillationsachse Z, eine Werkstückspindel mit einer Drehachse C und einer Bewegungsachse X, wobei das Maschinenbett mindestens zwei mit Abstand angeordnete Lagerflächen für den Linearmotor und für die Werkstückspindel aufweist und zwischen den beiden Lagerflächen ein Spanraum vorgesehen ist, der zumindest teilweise durch das Maschinenbett begrenzt ist, wobei der Linearmotor an der ersten Lagerfläche und die Werkstückspindel mit Bezug zum Spanraum gegenüberliegend zum Linearmotor an der zweiten Lagerfläche gelagert ist.

Als Maschinenbett wird der Teil der Drehmaschine bezeichnet, der zwecks Lagerung der Werkzeug- und Werkstückantriebe ausreichend steif ausgebildet ist und das Auftreten von Schwingungen zwischen den verschiedenen Lagern weitestgehend verhindert. Das Maschinenbett ist daher aus relativ festem Material wie Gusseisen, Granit oder Polymerbeton gefertigt und weist entsprechend große Wandstärken auf. Die Festigkeit des verwendeten Werkstoffs in Verbindung mit ausreichend großen Wandstärken gewährleisten zum einen eine ausreichend große Steifigkeit, die einen Schwingungseintrag bzw. die Schwingungsamplitude beschränkt. In Verbindung mit der vorhandenen Masse wird zum anderen eine größtmögliche Unterdrückung der Schwingung erreicht. Die eingetragenen Schwingungen werden also bis auf ein Minimum aufgefangen. Das Maschinenbett ist, soweit möglich, einteilig ausgebildet, da jede Teilung eine Schwachstelle bildet. Teile, die die Steifigkeit nur gering unterstützen können als Anbauteil ausgebildet sein. Steifigkeits- und festigkeitsrelevante Maschinenbettteile weisen in der Regel eine Wandstärke von mehr als 7 mm auf. Ausnahmen hierzu können Anbauteile aus Aluminium sein, die aufgrund der Herstellung oftmals größere Wandstärken aufweisen. Insbesondere bei der Verwendung von Polymerbeton sind in der Regel Wandstärken von mindestens 15 mm für steifigkeitsrelevante Maschinenbettteile notwendig.

Das Maschinenbett kann über Dämpfungslager auf einem Maschinengestell schwingungsentkoppelt gelagert sein. Das Maschinengestell erfüllt in diesem Fall eine Transport- und eine Tisch- bzw. Aufstandsfunktion für das Maschinenbett sowie eine Bauraumfunktion für Anbauteile. Das Maschinengestell ruht über Aufstellfüße auf einer Lager- bzw. Bodenfläche. Die Aufstandsebene wird idealisiert durch die Aufstellfüße bzw. deren Ausstellfläche aufgespannt. Die Tatsache, dass die Aufstellflächen aufgrund der Ausrichtung nach einer Bodenfläche in der Regel nicht exakt in einer Ebene liegen, bleibt dabei unberücksichtigt. Das Maschinengestell kann den vertikalen Aufbau betreffend auch zwei oder mehrteilig ausgebildet sein. Grundsätzlich kann es vorgesehen sein, das Maschinenbett über die Dämpfungslager direkt auf einer Bodenfläche zu lagern. Dies hängt von der Höhe des Maschinenbetts bzw. von der Höhe der Boden- bzw. einer Podestfläche ab, die dann die Maschinengestellfunktion erfüllt.

Als Spanraum wird der Raum bezeichnet, in dem mit direktem Spanflug zu rechnen ist. Ausgehend vom Arbeitsraum, also dem Raum, in dem mit der Bewegung der Werkzeuge bzw. des Werkstücks zu rechnen ist, ist der Spanraum weiter bzw. größer und endet an der jeweiligen Wand, an der die Späne auftreffen und mit dem Kühl- und Schmiermittel abfließen. Solche Wände sind in der Regel gegenüber der Horizontalen angestellt, so dass ein Abfließen des Kühl- und Schmiermittels mit den Spänen zu einer Auslauföffnung des Spanraums gewährleistet ist. Im Bereich der Auslauföffnung laufen die verschiedenen Kühl- und Schmiermittelströme zusammen und verlassen den Spanraum. An die Auslauföffnung schließt ein Kühl- und Schmiermittelkanal an, der den Kühl- und Schmiermittelstrom nach unten weiterführt und anschließend zu einer Seite hin umlenkt.

Der Begriff "Linearmotor" umfasst die Klasse der Asynchronmotoren, insbesondere die Klasse der Synchronmotoren sowohl in der flachen Ausführung als auch in der Variante als runder Tauchspulen- bzw. Voice-Coil-Antrieb.

Es ist bereits eine Drehmaschine zur Bearbeitung von optischen Werkstücken aus der DE 10 2005 021 638 B4 bekannt. Die Drehmaschine weist eine Fast-Tool-Anordnung und eine Werkstückspindelanordnung auf, die auf einem steifen Maschinenbettunterteil gelagert und durch ein Maschinenoberteil abgedeckt ist. Das Maschinenbettunterteil und das Maschinenoberteil sind einteilig aus Polymerbeton gebildet. Das Maschinenbettunterteil erfüllt die Funktion des Maschinengestells. Das Maschinenbett insgesamt begrenzt einen Spanraum nach unten und zur Seite hin, wobei der Spanraum im Bereich einer Bodenwand eine Auslauföffnung aufweist, an die ein Kühl- und Schmiermittelkanal anschließt. Durch den Kühl- und Schmiermittelkanal wird das abzuführende Medium gesammelt aus dem Spanraum nach unten abgeführt und anschließend zur Seite hin umgelenkt.

Bei Drehmaschinen für Brillengläser aus Kunststoff ist der Einsatz eines hochdynamisch zwischen 50 Hz und 200 Hz oszillierenden Drehwerkzeuges notwendig, um eine möglichst hohe Werkstückdrehzahl und damit eine möglichst geringe Bearbeitungszeit zu erreichen. Damit wird auch eine ausreichend große Schnittgeschwindigkeit des Drehprozesses erreicht. Als Antrieb für das Werkzeug werden in der Regel Linearmotoren verwendet, an deren Aktor das Drehwerkzeug unmittelbar befestigt ist. Somit ist eine direkte Umsetzung der Aktor- bzw. Motorbewegung ohne Einsatz von Getriebegliedern gewährleistet.

Die für eine ausreichend hochfrequente Oszillationsbewegung einsetzbaren Linearmotoren müssen jedoch ausreichend große Primär- und Sekundärbauteile aufweisen, damit die notwendigen Beschleunigungskräfte generierbar sind. Mit der Größe der Primär- und Sekundärbauteile geht jedoch ein relativ hohes Gewicht einher. Damit der zu beschleunigende Aktor möglichst leicht ausfällt, ist dieser eisenlos ausgebildet und weist vorteilhafterweise einen leichten Kunststoffkern mit darauf angeordneten Wicklungen auf. Der Aktor stellt im Falle des Synchronmotors das Primärbauteil dar, welches hochfrequent oszillierend bewegt werden muss.

Bei der Herstellung von Brillengläsern ist sehr hohe Präzision gewünscht, damit die drehend hergestellte Brillenglasoberfläche einer möglichst kurzen oder keiner Nachpolitur bedarf. Das Drehwerkzeug bzw. dessen Antrieb leitet insbesondere aufgrund der hochfrequenten Oszillationsbewegung unweigerlich Schwingungen in das Maschinenbett ein, welche sich nachteilig auf die Präzision des Schneid- bzw. Drehprozess der Brillenglasoberfläche auswirken.

Damit die gewünschte hohe Präzision gewährleistet werden kann, muss das Maschinenbett zum einen insbesondere in Bezug auf die Oszillationsbewegung zwischen beiden Lagerflächen und unter Berücksichtigung der damit verbundenen dynamischen Belastung ausreichend steif ausgebildet sein. Zum anderen ist es notwendig, die Masse des Maschinenbetts möglicht groß auszubilden, damit die vom Drehwerkzeug eingetragenen Schwingungen möglichst umfangreich unterdrückt werden. So auch gemäß der Lehre der DE 10 2005 021 638 B4, wo das Maschinenoberteil aus Polymerbeton gebildet und einteilig mit dem Maschinenbett gekoppelt ist.

Mit der eingesetzten Masse geht zum einen ein entsprechendes Gewicht einher und zum anderen eine entsprechende Baugröße der Drehmaschine.

Die am Eingriffspunkt zwischen Werkzeug und Werkstück infolge der Bearbeitungskräfte entstehenden Verformungen setzen sich aus den Deformationen von allen an der Kraftübertragung beteiligten Bauteilen und Maschinenbettelementen zusammen. Mit einer Kraftfluss- und Verformungsanalyse werden die Beanspruchung der einzelnen Bauteile und Maschinenbettelemente und der jeweilige Anteil an den Gesamtverformungen zwischen den Kraftangriffsstellen untersucht. Die Kräfte an der jeweiligen Kraftangriffsstelle erzeugen wegen der unterschiedlich großen Hebelarme unterschiedliche Momente in verschiedenen Richtungen, die eine entsprechende Verformung des Maschinenbetts begründen.

Bei der konstruktiven Gestaltung der Maschinenbettquerschnitte ist sowohl der Biegebelastung als auch der Torsionsbeanspruchung Rechnung zu tragen. So hängen die Biegesteifigkeit hauptsächlich vom äquatorialen Trägheitsmoment und die Torsionssteifigkeit in erster Linie vom polaren Trägheitsmoment ab. Demnach strebt der Fachmann bei Werkzeugmaschinen große Massen sowie geschlossene und große Maschinenbettquerschnitte für maximale Stabilität an. Damit wird allen Belastungen Rechnung getragen. Es werden Werkstoffe mit hoher Schwingungsdämpfung ausgesucht, die zusätzlich eine große Maschinenbettmasse ergeben, damit das Maschinenbett nicht übermäßig durch Schwingungen angeregt wird.

Der Erfindung liegt die Aufgabe zugrunde, eine Drehmaschine für Brillengläser derart auszubilden und anzuordnen, dass eine verbesserte Handhabung der Maschine bei gleichzeitig ausreichend steifer Maschinenbettstruktur gewährleistet ist.

Gelöst wird die Aufgabe erfindungsgemäß durch die Ansprüche 1 und 2. Aufgrund der drastischen Reduktion der Masse des Maschinenbetts kann die Maschine insgesamt wesentlich kleiner ausgebildet werden, so dass die damit einhergehende Handhabung sowohl bezüglich Transport und Aufbaulogistik als auch bezüglich der Bedienung während des Betriebs verbessert ist. Eine Reduktion der Gusseisen-Masse des Maschinenbetts auf einen Wert m1, wobei der Wert m1 zwischen 100 kg und 500 kg, oder zwischen 150 kg und 300 kg, oder zwischen 170 kg und 200 kg oder 180 kg beträgt, erscheint vor dem Hintergrund der Größe und der Frequenz der aufzunehmenden Kräfte zunächst äußerst nachteilig. Während der Entwicklung der erfindungsgemäßen Drehmaschine hat sich gezeigt, dass bei der drehenden Herstellung von Brillengläsern der Einfluss der Schwingungen, mit denen das Maschinenbett beaufschlagt wird und die mangels Masse weniger gut kompensiert werden, weniger groß ist als anzunehmen war und dass die mit der reduzierten Masse des Maschinenbetts erreichten Werkstück-Qualitäten brauchbar sind. Bekannte Grundsätze für die Entwicklung eines Maschinenbetts, wie ein möglichst günstiges Verhältnis zwischen der Masse und der Steifigkeit, wurden nicht aufgegeben. Der bis dato mit der Masse einhergehende Vorteil betreffend die Unterdrückung bzw. Dämpfung von Schwingungsamplituden wurde überschätzt. Mit Bezug auf das beanspruchte Einsatzgebiet, die drehende Bearbeitung von Brillengläsern, wurde als vorteilhaft erkannt, dass insbesondere bei Maschinenbetten aus Gusseisen mit einer Reduktion der Masse und der damit verbundenen Erhöhung der Eigenfrequenz des Maschinenbetts kleinere Amplituden einhergehen, die den Bearbeitungsprozess weniger stark beeinflussen als zu erwarten war.

Dass das Verhältnis **einer bewegten Masse m2 des Linearmotors zu der Masse m1 des Maschinenbetts** ein Quotient Q ist, wobei der Quotient Q zwischen 1:500 und 1:20, oder zwischen 1:300 und 1:30, oder zwischen 1:250 und 1:30, oder zwischen 1:150 und 1:30, oder zwischen 1:60 und 1:30 oder zwischen 1:140 und 1:100, oder 1:40 oder 1:120 ist, führt zu einem sehr günstigen Schwingungsverhalten bei dem hochdynamischen Schneid- bzw. Drehprozess. Das sehr günstige Schwingungsverhalten wird auch bei Einsatz einer erfindungsgemäß reduzierten Masse des Maschinenbetts wie oben erläutert erreicht. Mit diesem Verhältnis einhergehend sind die vorstehend beschriebenen Vorteile bezüglich der Größe der Maschine. Denn damit das erfindungsgemäße Verhältnis erhalten werden kann, muss das Maschinenbett - bei den derzeit verfügbaren Linearmotoren - relativ klein ausgebildet sein.

Zu der bewegten Masse m2 zählen der Aktor des Linearmotors inklusive der bewegten Lager- bzw. Führungsteile sowie die Drehwerkzeugaufnahme. Bei dem Aktor handelt es sich meist um das Primärteil des Motors, welches in der Regel einen möglichst leichten und damit eisenlosen Kern aufweist. Im Falle des klassischen Linearmotors ist der Aktor innerhalb des Motorgehäuses bzw. Stators über entsprechende Lagermittel gelagert. Im Falle des Voice-Coils bzw. Tauchspulenantriebs ist der Tauchspule als Primärteil ein Führungsteil nach- oder vorgelagert, welches statorseitig gelagert ist. Das Führungsteil zählt in diesem Fall auch zu der bewegten Masse m2. Bei Antrieben mit drehenden Motoren ist bei der bewegten Masse ergänzend zu der Masse des Läufers noch die bewegte Masse des Getriebes zu berücksichtigen.

Der erfindungsgemäße Quotient ist nur mit relativ viel bewegter Masse oder mit einem relativ leichten Maschinenbett zu gewährleisten. Die bewegte Masse wird in der Regel nicht größer ausgebildet als notwendig. Zwecks Erhalt des erfindungsgemäßen Quotienten Q wäre demnach die Masse des Maschinenbetts zu reduzieren, was vor dem Hintergrund der aufzunehmenden Kräfte und Frequenzen wie vorstehend ausgeführt äußerst nachteilig erscheint.

Der Quotient Q, also das Verhältnis **m2** zu **m1,** ist als Bruch aufzufassen, bei dem die Masse **m2** im Zähler und die Masse **m1** im Nenner steht. Für die angegebenen Werte im Nenner ist eine Toleranz von 3 zu berücksichtigen, d. h. die angegebenen Zahlenwerte können um 3 schwanken. So sind beispielsweise für den Wert 1:120 auch die Werte 1:117, 118, 1:119, 1:121, 1:122 und 1:123 als möglich und offenbart anzusehen.

Vor dem Hintergrund der zur Verfügung stehenden Linearantriebe für den oszillierenden Antrieb des Drehmeißels und deren bewegter Masse von 1,0 bis 1,5 kg einerseits und vor dem Hintergrund des zumindest anzunehmenden Frequenzbereichs zwischen 25 Hz und 200 Hz, in dem die maßgebliche Bearbeitung stattfindet, andererseits hat sich das erfindungsgemäße Massenverhältnis auf Basis der erfindungsgemäß reduzierten Eisenguss-Masse m1 als sehr vorteilhaft herausgestellt.

Erfindungsgemäß ist zudem vorgesehen, dass das Maschinenbett als ein nach unten offenes Gussbett ausgebildet ist, das mehrere in Richtung der Oszillationsachse Z verlaufende Querrippen und/oder mindestens eine in Richtung der Bewegungsachse x verlaufende Längsrippe aufweist, wobei sich die Querrippen zwischen der Lagerfläche für den Linearmotor und der Lagerfläche für die Werkstückspindel erstrecken. Dadurch, dass das Maschinenbett nach unten offen ist, sind keine Kernlager innerhalb der jeweiligen Rippe notwendig, die die Ausbildung bzw. Steifigkeit der jeweiligen Rippe nachteilig beeinflussen. Zudem steht mangels Kernlager mehr Bauraum für die Diagonalrippen zur Verfügung. Im Gegensatz zu einem geschlossenen Maschinenbettquerschnitt, dessen Biegelinie in der Mitte des Maschinenbettquerschnitts liegt, kommt es bei einem nach unten offenen Maschinenbett zu einer Verlagerung der Biegelinie zur geschlossenen Seite des Maschinenbetts. Der Abstand zwischen der Biegelinie und einem Lastangriffspunkt wird kleiner. Dies wirkt sich vorteilhaft auf das Schwingungsverhalten des Maschinenbetts aus. Die Querrippe, die parallel zu der Oszillationsbewegung verläuft, gewährleistet ein hohes Maß an Steifigkeit, betreffend die hochfrequente Oszillationslast bei der Drehbewegung, dies insbesondere, weil die Querrippen die Lagerfläche des Linearmotors mit der Lagerfläche der Werkstückspindel verbinden. Während der hochdynamischen Drehbewegung werden die Schwingungen demnach idealerweise durch die beiden Querrippen aufgenommen. Mit der Längsrippe wird die Steifigkeit der Querrippe ergänzt.

Ferner kann es vorteilhaft sein, wenn die Bewegungsachse X horizontal und in eine Richtung rechtwinklig zur Oszillationsachse Z bzw. rechtwinklig zu der Drehachse C verläuft und mit Bezug zur Richtung der Bewegungsachse X benachbart zum Linearmotor eine Frässpindel mit einer Spindelachse S vorgesehen ist, wobei die Spindelachse S gegenüber der Vertikalen um einen Winkel zwischen 5° und 30° angestellt ist. Die Bewegungsachse X kann dabei als Translations- oder als Schwenkachse ausgebildet sein. Damit ist die Achskombination zur drehenden Herstellung von Brillengläsern vorteilhaft ergänzt.

Durch die horizontale Bewegungsachse X kann der Antrieb für die Bewegungsachse X kleiner ausgebildet sein als bei einer gegenüber der Horizontalen angestellten Bewegungsachse X. Somit ist auch keine Kühlung des Antriebs notwendig.

Die Frässpindel ist mit Bezug zur Richtung der Bewegungsachse X in etwa auf der Höhe der Auslassöffnung vorgesehen. Diese schließt mit Bezug zu der zu erwartenden Spanflugbahn beim Fräsen einen in horizontaler Richtung verlaufenden Abstand zwischen der Auslassöffnung und der Spindelachse S von bis zu 100 mm oder 200 mm ein. Ergänzend ist festzustellen, dass die Drehrichtung der Frässpindel derart gewählt werden sollte, dass die entstehenden Späne zu der Auslassöffnung hin geschleudert werden.

Vorteilhaft kann es auch sein, wenn die Werkstückspindel eine Translationsachse W aufweist, die rechtwinklig zu der Bewegungsachse X verläuft. Somit ist die Achskombination zur drehenden Herstellung von Brillengläsern weiter ergänzt, so dass die optisch aktive Fläche des Brillenglases und auch eine flexible Randbearbeitung möglich sind.

Die Translationsachse W kann auch parallel zur Drehachse C verlaufen, wobei abweichend hiervon bzw. ergänzend eine Anstellung gegenüber der Oszillationsachse Z vorgesehen ist.

Dabei kann es vorteilhafterweise vorgesehen sein, dass das Maschinenbett (2) zwei in Richtung der Bewegungsachse X verlaufende als Maschinenbettwand ausgebildete Längsrippen (2.93, 2.91) aufweist. Zusätzlich zu den Querrippen und den Längsrippe sind Maschinenbettwände vorgesehen, die das Maschinenbett zur Seite bzw. nach vorne und hinten begrenzen und parallel zu der jeweiligen Rippe angeordnet sind.

Dass die Querrippe im Bereich der Lagerfläche für den Linearmotor über mindestens 50 % bis 90 % der Höhe des Maschinenbetts ausgebildet ist, gewährleistet eine hohe Steifigkeit des Maschinenbetts zwischen der Lagerfläche für den Linearmotor und der Lagerfläche für die Werkstückspindel. Voraussetzung hierfür ist bei Vorliegen eines Spanraums mit einer abfallenden bzw. geneigt verlaufenden Bodenwand, dass die Querrippe bzw. die Lagerfläche für den Linearmotor mit Bezug zu einer Länge 1 des Spanraums in der Hälfte des Maschinenbetts angeordnet ist, in der der Spanraum aufgrund der abfallenden Bodenwand eine geringere Tiefe aufweist. In der anderen Hälfte ist die Tiefe des Spanraums größer, da die Bodenwand zwecks optimalen Spänetransports kontinuierlich abfällt. In dieser Hälfte wäre eine ausreichend hohe Ausbildung der Querrippen nicht gewährleistet.

Von Bedeutung kann für die vorliegende Erfindung sein, wenn mindestens eine Querrippe dicker ausgebildet ist als die Längsrippe. Da die Querrippen einen Großteil der Belastung aufnehmen müssen, ist eine entsprechend dicke Ausbildung vorgesehen, wobei die Längs- und Diagonalrippen wegen der erfindungsgemäß klein zu haltenden Masse dünner ausgebildet sind.

Im Zusammenhang mit der erfindungsgemäßen Ausbildung und Anordnung kann es von Vorteil sein, wenn das Maschinenbett mehrere Diagonalrippen aufweist, die mit Bezug zu den Querrippen und der Längsrippe diagonal bzw. in einem Halbwinkel angeordnet sein können. Die Diagonalrippen unterstützen die Torsionssteifigkeit des Maschinenbetts.

Vorteilhaft kann es ferner sein, wenn das Maschinenbett höchstens drei Lagerstellen aufweist, wobei mindestens eine erste Lagerstelle unmittelbar oder zumindest im Bereich unterhalb der Lagerfläche für den Linearmotor vorgesehen ist. Das mit dem Linearmotor einhergehende Gewicht muss somit nicht von dem Maschinenbett getragen werden, d. h. eine in horizontaler Richtung verlaufende Übertragung der Gewichtslast durch das Maschinenbett in der Art eines Biegebalkens wird verhindert. Dies wirkt sich günstig auf die durch den Linearmotor eingetragenen Schwingungen aus, insbesondere vor dem Hintergrund, dass der Linearmotor hochdynamisch oszillierende Bewegungen mit bis zu 300 Hz ausführt, die den Großteil der insgesamt in das Maschinenbett eingetragenen Schwingungen begründen.

Außerdem kann es vorteilhaft sein, wenn die zweite und eine dritte Lagerstelle unterhalb der Lagerfläche für die Werkstückspindel an einem vorderen und an einem hinteren Ende des Maschinenbetts vorgesehen sind. Hierbei handelt es sich um das vordere und hintere Ende der Lagerfläche für den Spindel-Linearantrieb. Die Lagerfläche für den Spindel-Linearantrieb und die quer dazu hervorstehende Lagerfläche für den Linearmotor begründen die grundlegende T-Form des Maschinenbetts. Die drei Lagerstellen befinden sich vorzugsweise im Bereich der Enden dieses T-förmigen Gebildes, weil die vom Ort des Schwingungseintrages entfernt liegenden Massenanteile des Maschinenbetts in ihrem Schwingungsverhalten kritischer bewertet wurden als Anteile mit weniger großem Abstand. Durch Auflage der äußeren Ecken bzw. Enden des Maschinenbetts werden diese in ihrem Schwingungsverhalten sehr günstig beeinflusst.

Ferner kann es vorteilhaft sein, wenn die Lagerstelle mit Bezug zu der Unterkante des Maschinenbetts einen vertikalen Versatz v4, v4' aufweist, der mindestens 20 mm bis 70 mm beträgt. Somit ist das jeweilige unter der Lagerstelle anzuordnende Dämpfungslager mit Bezug zur Vertikalen in das Maschinenbett integriert. Die Aufbauhöhe wird insgesamt reduziert.

Dabei kann es von Vorteil sein, wenn das Maschinenbett eine Unterkante aufweist und zwischen der Unterkante und der Lagerfläche ein vertikaler Versatz mit dem maximalen Wert v3 vorgesehen ist, wobei der Wert v3 zwischen 100 mm und 300 mm, zwischen 150 mm und 250 mm oder 200 mm groß ist. Die Aufbauhöhe des Maschinenbetts ist damit sehr klein, was letztlich zu einer kleinen Handhabungshöhe der Drehmaschine führt. Die mit dieser Aufbauhöhe zu realisierenden Höhe der Rippen des Maschinenbetts reicht aufgrund der reduzierten Masse aus, um die notwendige Steifigkeit zu erreichen.

Der Abstand zwischen der jeweiligen Lagerfläche des Antriebs und der zugehörigen Lagerstelle des Dämpfungslagers weist demnach einen Wert v3 - v4 zwischen 30 mm und 280 mm auf.

Schließlich kann es von Vorteil sein, wenn die Drehmaschine mit Bezug zu einer Bedienerposition eine Tiefe mit dem maximalen Wert t1 aufweist und der Wert t1 zwischen 800 mm und 1050 mm, zwischen 850 mm und 980 mm, zwischen 870 mm und 950 mm oder 930 mm groß ist. Die Handhabbarkeit bzw. Bedienung der Maschine wird somit verbessert. Zudem weist die Maschine eine entsprechend kurze Standfläche auf. Schließlich kann die Maschine aufgrund der geringen Tiefe durch einen Großteil von Türen in Geschäftsräumen transportiert werden, die 900 mm bis 1000 mm breit sind.

Vorteilhaft kann es hierzu auch sein, wenn das Maschinenbett mit Bezug zu der Bedienerposition die Breite mit einem maximalen Wert b1 aufweist und der Wert b1 zwischen 500 mm und 900 mm, zwischen 600 mm und 800 mm oder 680 mm groß ist. Die geringe Breite ist auch durch den Einsatz der erfindungsgemäß verringerten Masse möglich. Die Breite wird bestimmt durch die Breite der die in Richtung der Oszillationsachse Z während der Bearbeitung gegenüberstehenden Werkzeug- und Werkstückantriebe sowie die Breite des dazwischen vorgesehenen Spanraums.

Ferner kann es von Vorteil sein, wenn die Drehachse C der Werkstückspindel mit Bezug zu der Aufstandsebene der Drehmaschine einen vertikalen Versatz aufweist, der maximal den Wert v1 hat, wobei der Wert v1 zwischen 600 mm und 1050 mm, zwischen 700 mm und 900 mm oder 830 mm groß ist. Die Höhe der Werkstückspindel ist für die Handhabung einer manuell bedienbaren Drehmaschine, insbesondere für den regelmäßigen Werkstückwechsel, die kennzeichnende Größe. Aufgrund der erfindungsgemäßen Höhe ist ein bequemer Werkstückwechsel auch für kleinere Personen gewährleistet.

Weiterhin kann es von Vorteil sein, wenn der Spanraum zu einer Seite durch mindestens eine gegenüber der Horizontalen angestellten Wand des Maschinenbetts begrenzt ist, in der die Auslauföffnung vorgesehen ist, wobei die Auslauföffnung des Spanraums derart angeordnet ist, dass das zu transportierende Medium den Spanraum zu einer Seite hin - nicht nach unten - verlässt. Das abzuführende Medium, bestehend aus Kühl- und Schmiermittel sowie Spänen, sammelt sich erstmalig an der Auslauföffnung und wird von dort gesammelt weitergeführt. Es fließt in einer im Wesentlichen horizontalen, maximal um 30° geneigten Fließrichtung ab. Der an die Auslauföffnung angeschlossene Auslass der Drehmaschine ist somit deutlich höher als ein Auslass, bei dem die Fließrichtung aus der Auslauföffnung im Wesentlichen in vertikaler Richtung verläuft. Denn damit wäre ein Höhenverlust verbunden, der einen niedrigeren Auslass zur Folge hätte. Das Medium kann in dem beanspruchten Fall ohne zusätzliche Mittel wie eine Hebeanlage in einen Auffangbehälter eingeleitet werden. Es ist auch nicht notwendig, den Auffangbehälter nach unten zu versetzen, um eine möglichst tiefe Einlauföffnung zu gewährleisten.

Von Vorteil kann es hierbei sein, wenn der Spanraum mit Bezug zu der Bewegungsachse X eine Länge 1 aufweist und die Auslassöffnung mit Bezug zu der Bedienerposition in einem hinteren Viertel des Spanraums oder in einer hinteren Wand des Spanraums angeordnet ist. Die Auslassöffnung ist somit an der dem Bediener gegenüberliegenden Seite vorgesehen, bei der weder die Bedienerposition noch ein Antrieb vorgesehen sind.

Des Weiteren kann es von Vorteil sein, wenn eine Verkleidung mit einer Zugangsöffnung vorgesehen ist, die einen regelmäßigen manuellen Werkstück-, Werkzeug- und Motorwechsel gewährleistet und die eine Kante aufweist, wobei die Kante mit Bezug zu der Aufstandsebene einen maximalen vertikalen Versatz aufweist, der maximal den Wert v2 hat, wobei der Wert v2 zwischen 900 mm und 1200 mm, zwischen 950 mm und 1100 mm oder 1030 mm groß ist. Als Motor sind die Antriebe, also die Werkstückspindel, die Frässpindel oder der Linearmotor sowie deren weitere Funktionsmittel wie Kühlung, elektrische Versorgung etc. anzusehen. Die Höhe der Unterkante gewährleistet eine bequeme und umfassende Handhabung während des laufenden Betriebs, also insbesondere den manuellen Werkstückwechsel einerseits sowie eine Wartung der Maschine andererseits. Die Zugangshöhe ist dabei dieselbe. Die Zugangsöffnung ist horizontal ausgerichtet, d.h. der Zugang erfolgt von oben, wie bei einer Kiste. Die Unterkante der Zugangsöffnung wird somit quasi übergriffen.

Dabei kann es von Vorteil sein, wenn eine Verkleidung vorgesehen ist, die mindestens einen schwenkbar gelagerten Deckel mit einer Aussparung aufweist, wobei die Aussparung die Zugangsöffnung zumindest teilweise bildet, und der Deckel eine Tiefe t2 aufweist, die mindestens 80 % der Tiefe t1 der Drehmaschine beträgt und der Deckel eine Breite b2 aufweist, die mindestens 80 % bis 100 % der Breite b1 des Maschinenbetts beträgt. Mit dem Öffnen des Deckels sind somit alle für die Bearbeitung wesentlichen Teile der Maschine, insbesondere die Antriebe, zugänglich.

Der Deckel kann auch aus mehreren Teildeckeln gebildet sein, die nebeneinander angeordnet sind. Die Aussparung kann dabei in einem der Teildeckel vorgesehen sein oder durch eine entsprechende Anordnung der Teildeckel um die Zugangsöffnung herum gebildet sein. Der Deckel ist im Wesentlichen horizontal angeordnet bzw. verläuft parallel zur Bewegungsachse X. Damit wird eine möglichst geringe Bauhöhe gewährleistet.

Außerdem kann es vorteilhaft sein, wenn ein Schaltschrank vorgesehen ist, der mit Bezug zu der Bedienerposition links oder rechts vom Maschinenbett angeordnet ist. Mit Bezug zu der Richtung der Drehachse C bzw. der Oszillationsachse Z ist der Schaltschrank vor oder hinter dem Maschinenbett platziert. Die geringe Tiefe der Drehmaschine wird somit nicht beeinträchtigt.

Ferner kann es vorteilhaft sein, wenn die Werkstückspindel ein Abschirmteil aufweist, das die Werkstückspindel in Richtung der Bewegungsachse X gegenüber einem Teil des Spanraums abschirmt. Somit ist der Spanflug auf den Bereich des Spanraums beschränkt, in dem die Werkstückspindel platziert ist. Wenn sich die Werkstückspindel an einem Ende des Spanraums befindet, wie beim Fräsprozess, so wird der übrige Spanraum vor Spanflug geschützt.

In diesem Zusammenhang kann es vorteilhaft sein, wenn eine mit dem Maschinenbett fest verbundene Abschirmwand vorgesehen ist, die zusammen mit dem Abschirmteil die Werkstückspindel in Richtung der Bewegungsachse X gegenüber einem Teil des Spanraums abschottet. Da sich die Abschirmwand mit der Werkstückspindel in Richtung der Bewegungsachse X mitbewegt, ist ein entsprechender Abstand zu den Spanraumwänden einerseits und zu den Werkzeugen, insbesondere dem Drehmeißel andererseits notwendig. Ein Abschirmteil gewährleistet demnach zumindest in einer Position der Werkstückspindel eine erhöhte Abschottung gegenüber dem übrigen Spanraum. Dies gilt insbesondere für die Position an der Frässpindel, also beim Fräsen.

Letztlich ist es von Vorteil, wenn in der funktionsfähigen Ausführung eine Gesamtmasse mit dem maximalen Wert m3 vorgesehen ist, wobei der Wert m3 zwischen 500 kg und 1000 kg, zwischen 600 kg und 800 kg, zwischen 670 kg und 780 kg oder 750 kg beträgt. Mit der erfindungsgemäßen Ausbildung des Maschinenbetts lässt sich eine geringere Gesamtmasse der Dreh- und Fräsmaschine erreichen. Diese erweitert den möglichen Einsatz der Maschine in Räumen mit einer relativ geringen Deckenlast.

Weitere Vorteile und Einzelheiten der Erfindung sind in den Patentansprüchen und in der Beschreibung erläutert und in den Figuren dargestellt. Es zeigen:
- Figur 1: eine perspektivische Ansicht der Dreh- und Fräsma- schine;
- Figur 2: eine perspektivische Ansicht der Dreh- und Fräsma- schine von rechts;
- Figur 3: eine perspektivische Ansicht des Maschinenbettes von rechts hinten;
- Figur 4: eine perspektivische Ansicht des Maschinenbettes von links unten;
- Figur 5: eine perspektivische Ansicht der Dreh- und Fräsma- schine von vorne ohne Verkleidungselemente;
- Figur 6: eine perspektivische Ansicht der Dreh- und Fräsma- schine von vorne;
- Figur 7: eine perspektivische Ansicht der Dreh- und Fräsma- schine ohne Verkleidungselemente von links hinten;
- Figur 8a: eine perspektivische Ansicht der Dreh- und Fräsma- schine von oben mit der Werkstückspindel in einer vorderen Position;
- Figur 8b: Darstellung nach Figur 8a mit der Werkstückspindel in einer zweiten Position am Drehmeißel;
- Figur 8c: Abbildung nach Figur 8b mit der Werkstückspindel in einer dritten Position am Fräser;
- Figur 8d: Abbildung nach Figur 8c mit der Werkstückspindel in einer vierten Position seitlich zum Fräser.

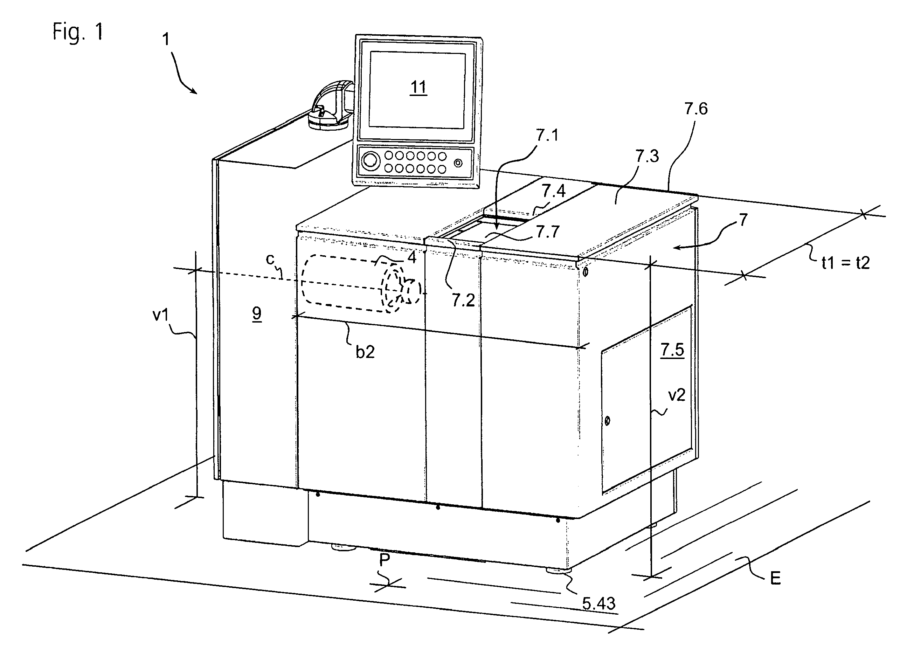

Die in Figur 1 dargestellte Dreh- und Fräsmaschine 1 weist eine umseitige Verkleidung 7 auf, die auf einer rechten Seite eine Wartungsklappe 7.5 besitzt und nach oben durch einen Deckel 7.3 begrenzt ist. Der Deckel 7.3 weist eine Aussparung 7.4 für eine Zugangsöffnung 7.1 auf. Mit Bezug zu einer Bedienerposition P ist auf der linken Seite der Dreh- und Fräsmaschine 1 ein Schaltschrank 9 vorgesehen, an dem ein Bedienpanel 11 schwenkbar angeordnet ist. Der Schaltschrank 9 ist dabei höher ausgebildet als die Verkleidung 7 bzw. deren Deckel 7.3. Der Deckel 7.3 ist im Bereich einer hinteren Kante 7.6 schwenkbar angelenkt und durch die Bedienperson in der Position P nach oben aufzuklappen. Hierzu ist im Vorfeld das Bedienpanel 11 zur linken Seite hin zu verschwenken.

Im aufgeklappten Zustand des Deckels 7.3 (nicht dargestellt) ist die Dreh- und Fräsmaschine 1 von oben frei zugänglich, insbesondere können im aufgeklappten Zustand des Deckels 7.3 sämtliche Antriebe gewartet bzw. ausgetauscht werden. Als Zugriff zum regelmäßigen bzw. manuellen Werkstückwechsel dient die Zugangsöffnung 7.1 bzw. die Aussparung 7.4. Die Zugangsöffnung 7.1 ist über ein Glasschott 7.7 während des Betriebes verschlossen. Zwecks Werkstückwechsel öffnet sich das Glasschott 7.7 in translatorischer Richtung nach hinten, sodass von oben durch die Zugangsöffnung 7.1 innerhalb der Aussparung 7.4 der Zugriff zur Werkstückspindel 4 (skizziert dargestellt) gewährleistet ist.

Die Dreh- und Fräsmaschine 1 weist eine Aufstandsebene E auf, die durch die nicht weiter dargestellten Aufstellfüße 5.43 aufgespannt wird und im Prinzip mit einer Aufstell- bzw. Bodenfläche zusammenfällt. Die Werkstückspindel 4, die nur skizziert dargestellt ist, weist eine Drehachse C auf, die mit Bezug zur Aufstandsebene E einen vertikalen Versatz v1 von etwa 830 mm aufweist. Der Deckel 7.3 weist eine Tiefe t2 auf, die der Tiefe t1 der Dreh- und Fräsmaschine 1 entspricht und etwa 930 mm beträgt.

Die Zugangsöffnung 7.1 bzw. die Aussparung 7.4 weisen eine Vorder- bzw. Unterkante 7.2 auf, über die der Bediener in der Position P zwecks Werkstückwechsel in die Zugangsöffnung 7.1 eingreift. Die Unterkante 7.2 weist mit Bezug zur Aufstandsebene E einen vertikalen Versatz v2 auf, der etwa 1030 mm groß ist.

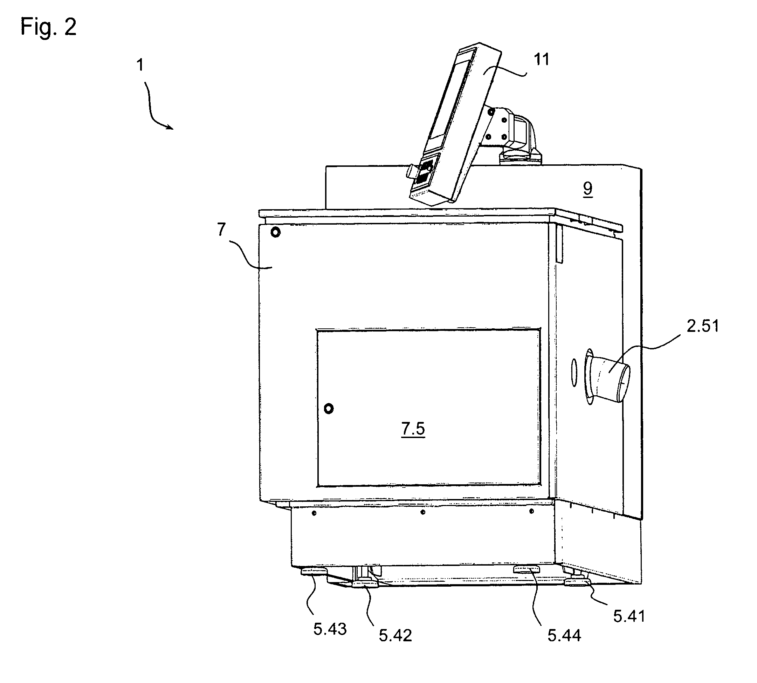

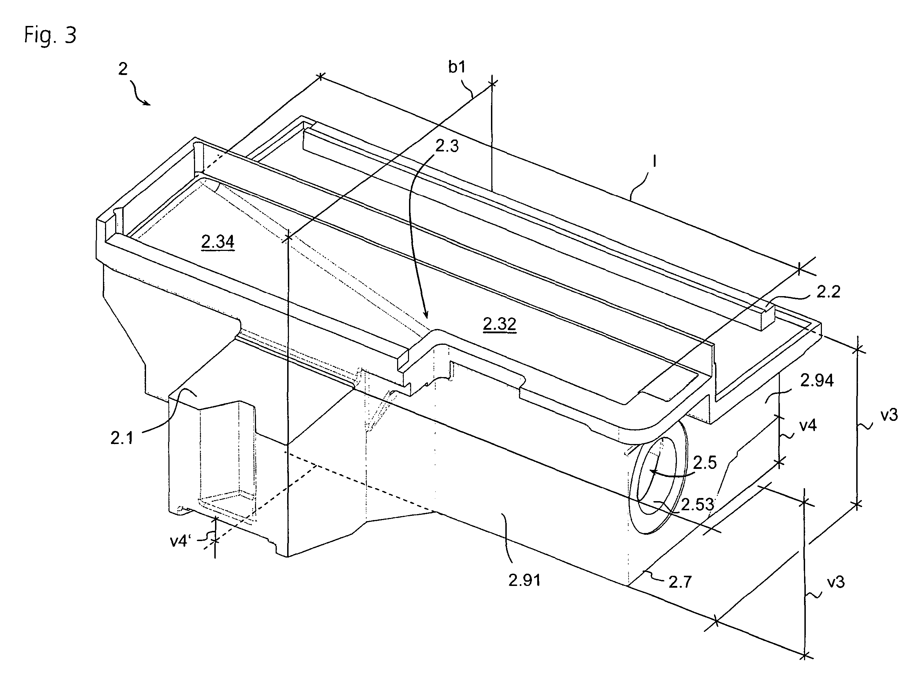

Figur 2 zeigt die Dreh- und Fräsmaschine 1 in der Ansicht von rechts unten. Die Verkleidung 7 ist nach unten geöffnet, dort treten vier Aufstellfüße 5.41 bis 5.44 hervor, über die die Dreh- und Fräsmaschine 1 auf einem nicht dargestellten Boden bzw. einer Abstellfläche platziert werden kann. Die vier Aufstellfüße 5.41 bis 5.44 spannen die vorstehend genannte Aufstandsebene E auf. Im Bereich der hinteren Seite der Verkleidung 7 ist ein Ablaufrohr 2.51 vorgesehen, welches an eine Auslassöffnung 2.5 gemäß Figur 3 angeschlossen ist.

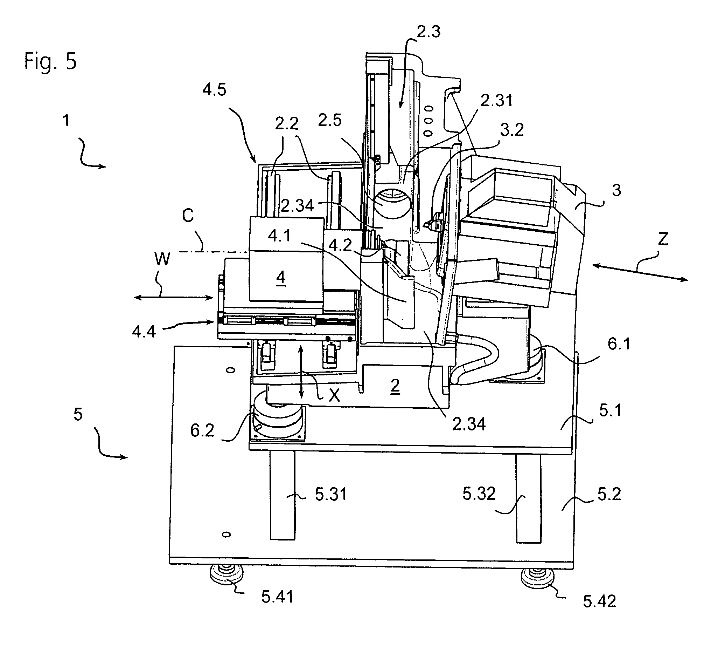

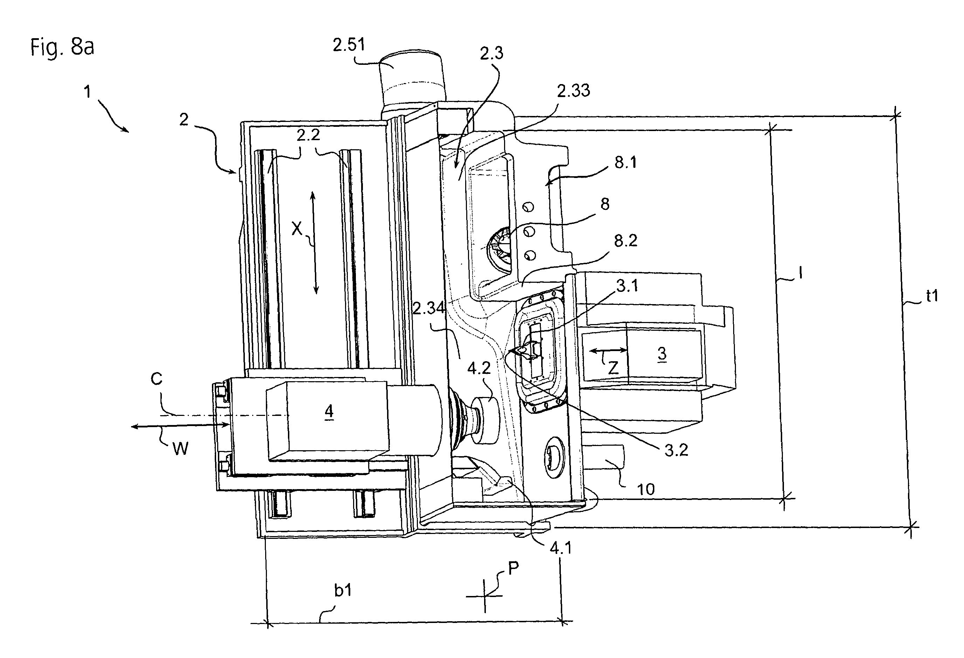

Figur 3 zeigt lediglich das Maschinenbett 2, mit Bezug zu der Bedienerposition P von rechts hinten. Das Maschinenbett 2 weist eine erste Lagerfläche 2.1 für einen Linearmotor 3 nach Figur 5 sowie eine zweite Lagerfläche 2.2 für die Werkstückspindel 4 auf. Die zweite Lagerfläche 2.2 ist aus einem Paar Lagerschienen gebildet, die am Maschinenbett 2 angeformt sind. Zwischen den beiden Lagerflächen 2.1, 2.2 ist ein Spanraum 2.3 vorgesehen. Der Spanraum 2.3 weist eine nach hinten, zur Auslassöffnung 2.5 hin abfallende Bodenwand 2.34 sowie eine linke Seitenwand 2.32 auf. Eine rechte Seitenwand 2.33 ist in Figur 8a zu sehen, während eine hintere Seitenwand 2.31, mit der Auslassöffnung 2.5 in Figur 5 zu sehen ist. Die Lagerfläche 2.1 ist mit Bezug zum Spanraum 2.3 gegenüberliegend zur Lagerfläche 2.2 angeordnet. Das Maschinenbett 2 erstreckt sich in vertikaler

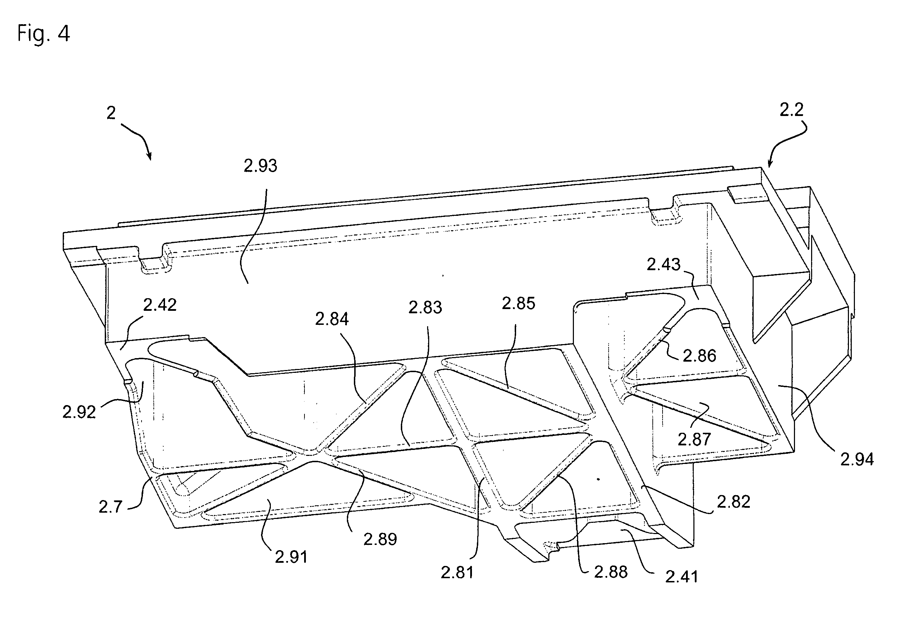

Richtung über eine Höhe v3 von etwa 200 mm und ist über vier Seitenwände 2.91 bis 2.94 begrenzt. Unterhalb der Lagerflächen 2.1, 2.2 sind drei Lagerstellen 2.41 bis 2.43 nach Figur 4 vorgesehen, die gemäß Figur 3 mit Bezug zu einer Unterkante 2.7 des Maschinenbettes 2 einen vertikalen Versatz v4, v4' in Höhe von etwa 60 mm aufweisen.

Der Spanraum 2.3 weist im vorderen Bereich der Seitenwand 2.94 nahezu keine Tiefe auf und wird aufgrund der abfallenden Bodenwand 2.34 nach hinten hin immer tiefer. Die zunehmende Tiefe führt zu einer reduzierten Resthöhe der unterhalb der Bodenwand 2.34 angeordneten Machinenbettstruktur. Damit eine möglichst geringe Reduzierung der beiden Querrippen 2.81, 2.82 gewährleistet ist, befindet sich diese, wie auch die Lagerfläche 2.1 für den Linearmotor, mit Bezug zu einer Länge 1 des Spanraums 2.3 in der ersten Hälfte des Spanraums 2.3. Somit können die beiden Querrippen 2.81, 2.82 mindestens über 50 % bis 90 % der Höhe v3 ausgebildet werden.

Das Maschinenbett 2 weist eine Breite b1 von etwa 680 mm auf. Der Spanraum 2.3 weist eine Länge 1 auf, die etwa 90 % der Länge des Maschinenbettes 2 beträgt.

In der hinteren Seitenwand 2.94 ist die Auslassöffnung 2.5 angeordnet, an die sich eine Kanalwand 2.53 als Teil der Seitenwand 2.94 anschließt.

Die Darstellung nach Figur 4 zeigt das Maschinenbett 2 in der Ansicht von links unten. Innerhalb der vier Seitenwände 2.91 bis 2.94 sind zwei Querrippen 2.81, 2.82 und eine mittig angeordnete Längsrippe 2.83 vorgesehen. Die vorgenannten Rippen 2.81 bis 2.83 erstrecken sich dabei großteils über die Höhe v3 des Maschinenbettes 2. Der Maschinenbettkörper 2 wird durch die vier Seitenwände 2.91 bis 2.94 und die quer dazu verlaufenden Querrippen 2.81, 2.82 sowie die Längsrippe 2.83 in sechs Segmente unterteilt. Innerhalb des jeweiligen Segmentes ist ergänzend eine Diagonalrippe 2.84 bis 2.89 vorgesehen. Die beiden Diagonalrippen 2.84 und 2.89 erstrecken sich dabei jeweils über zwei Segmente.

Die Lagerstelle 2.41 ist wie vorstehend schon beschrieben unter der Lagerfläche 2.1 für den Linearmotor 3 vorgesehen, während die beiden Lagerstellen 2.42 und 2.43 unterhalb der Lagerfläche 2.2 für die Werkstückspindel 4, jeweils am äußeren Eck des Maschinenbettes 2 angeordnet sind.

Nach Figur 5 ist die Dreh- und Fräsmaschine 1 ohne die Verkleidung 7 in der Ansicht von vorne dargestellt. Das Maschinenbett 2 ruht über die Dämpfungslager 6.1, 6.2 auf einem Maschinengestell 5 bzw. einer Stützplatte 5.1 des Maschinengestells 5. Die Stützplatte 5.1 ist über vier Stützteile 5.31, 5.32 auf einer Bodenplatte 5.2 gelagert, die wiederum über die vier Aufstellfüße 5.41, 5.42 abgestützt ist. Auf der Lagerfläche 2.2 ist die Werkstückspindel 4 mit der Drehachse C angeordnet. Die Werkstückspindel 4 mit dem Werkstück 4.2 ist über ein erstes Axiallager 4.4 in Richtung der Translationsachse W und über ein zweites Axiallager 4.5 in Richtung der Bewegungsachse X translatorisch verfahrbar. Mit Bezug zum Spanraum 2.3 gegenüberliegend ist der Linearmotor 3 mit dem Drehmeißel 3.2 mit der Oszillationsachse Z gelagert. Der Spanraum 2.3 wird nach hinten durch die hintere Seitenwand 2.31 begrenzt. Innerhalb der Seitenwand 2.31, angrenzend an die Bodenwand 2.34 ist die Auslassöffnung 2.5 vorgesehen. An der Werkstückspindel 4 ist ein Abschirmteil 4.1 vorgesehen.

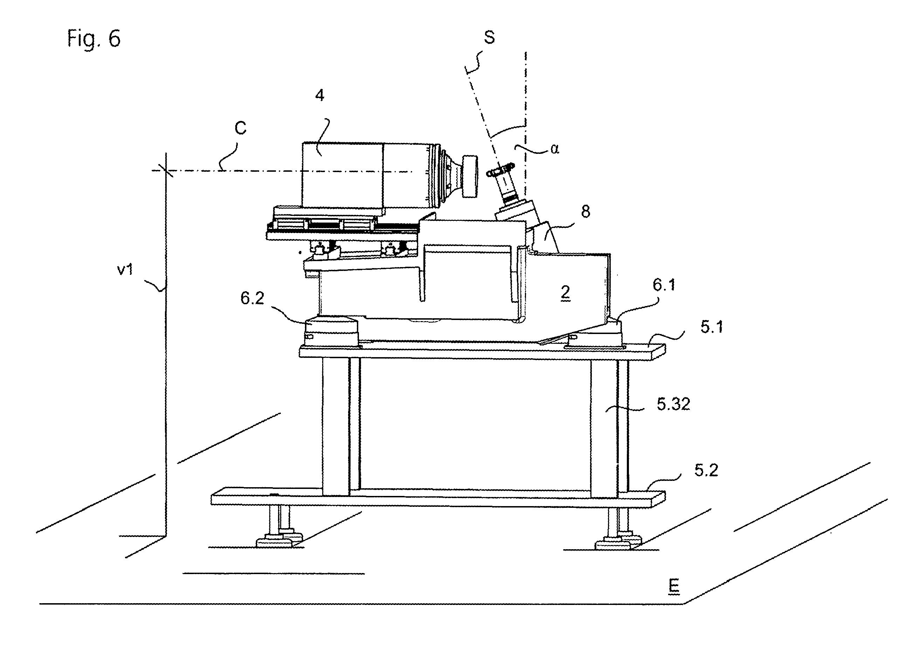

Nach Figur 6 ist benachbart zum nicht dargestellten Linearmotor 3 eine Frässpindel 8 mit einer Spindelachse S vorgesehen, wobei die Spindelachse S mit Bezug zur Vertikalen um einen Winkel α von etwa 20° angestellt ist.

Die Drehachse C der Werkstückspindel 4 weist gegenüber der Aufstandsebene E einen vertikalen Versatz v1 von etwa 830 mm auf.

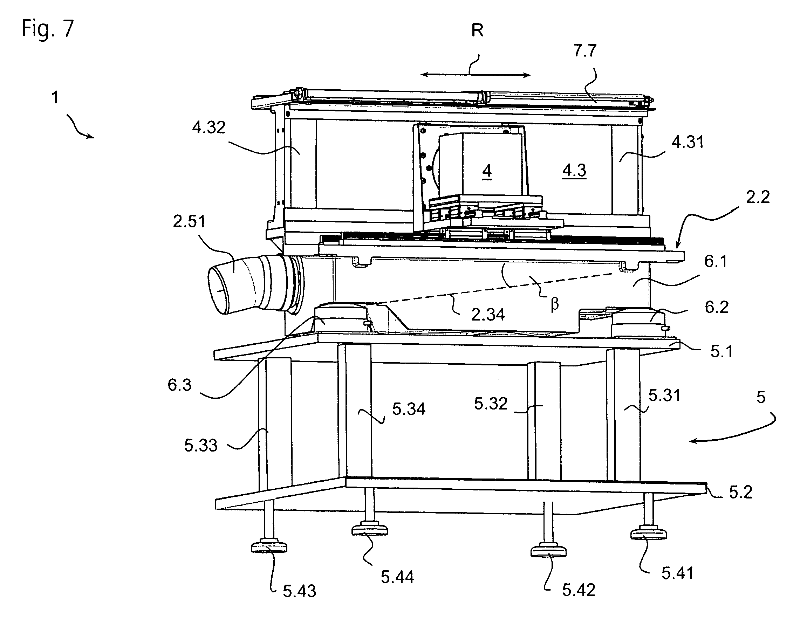

In der Darstellung nach Figur 7 sind alle vier Stützteile 5.31 bis 5.34 inklusive der vier Aufstellfüße 5.41 bis 5.44 dargestellt. Ebenso ist das hintere Dämpfungslager 6.3 dargestellt. Die Bodenwand 2.34 des Spanraumes 2.3 ist ebenfalls skizziert dargestellt, sie verläuft mit Bezug zur Horizontalen angestellt in einem Winkel β von etwa 13°.

Die Werkstückspindel 4 ist über ein Abschirmrollo 4.3, welches beidseitig an der Spindel befestigt ist, gegenüber dem Arbeitsraum abgeschottet. Das Abschirmrollo 4.3 weist einen rechten und einen linken Rollomechanismus 4.31, 4.32 auf, über die das Rollo auf der jeweiligen Seite ein- bzw. ausgelassen wird.

Auf der Oberseite ist das Glasschott 7.7 zu sehen, welches zwecks Eingriff und Werkstückwechsel der Pfeilrichtung R nach verschoben werden kann.

Nach Figur 8a weist die Werkstückspindel 4 das Abschirmteil 4.1 auf, welches mit der Werkstückspindel 4 in Richtung der Bewegungsachse X verschoben wird. Über das Abschirmteil 4.1 wird der gegenüberliegend zum Werkstück 4.2 angeordnete Spanraum 2.3 vor Spanflug geschützt, wie im Weiteren näher erläutert. Ferner sind Mittel 10 für die Zufuhr von Kühl- und Schmierflüssigkeit in Form einer Kühlflüssigkeitsleitung 10 vorgesehen. In der hier dargestellten Position befindet sich die Werkstückspindel 4 ganz vorne bei der Bedienerposition P. Aus der Bedienerposition P kann der Bediener über das vorstehend beschriebene Glasschott 7.7 bzw. die Zugangsöffnung 7.1 das Werkstück 4.2 wechseln.

Das Maschinenbett 2 weist eine Tiefe t1 von etwa 930 mm auf.

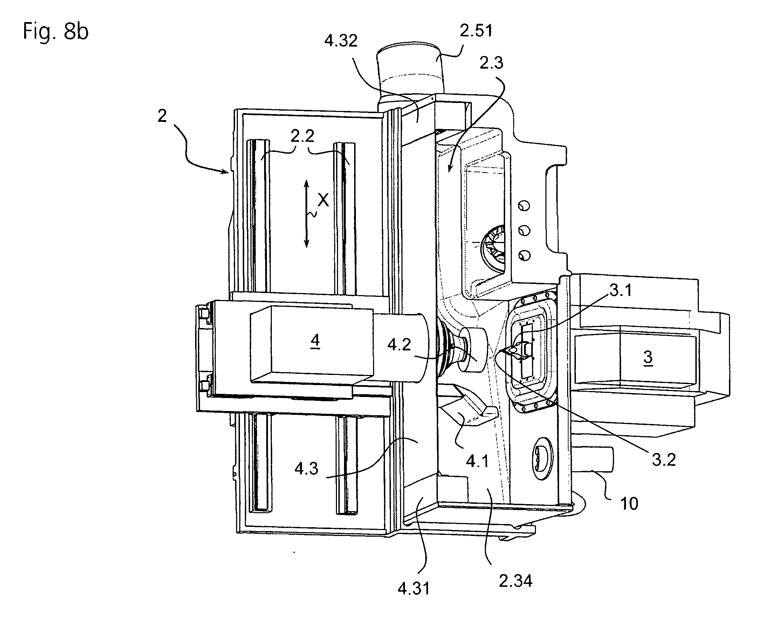

Nach Darstellung Figur 8b ist die Werkstückspindel 4 in einer zweiten Position unmittelbar gegenüberliegend zum Linearmotor 3 und dem durch den Linearmotor 3 bewegten Drehmeißel 3.2. In der zweiten Position wird schon deutlich, wie die Abschirmwand 8.2 den vorderen Teil des Spanraumes 2.3 zumindest teilweise abschottet.

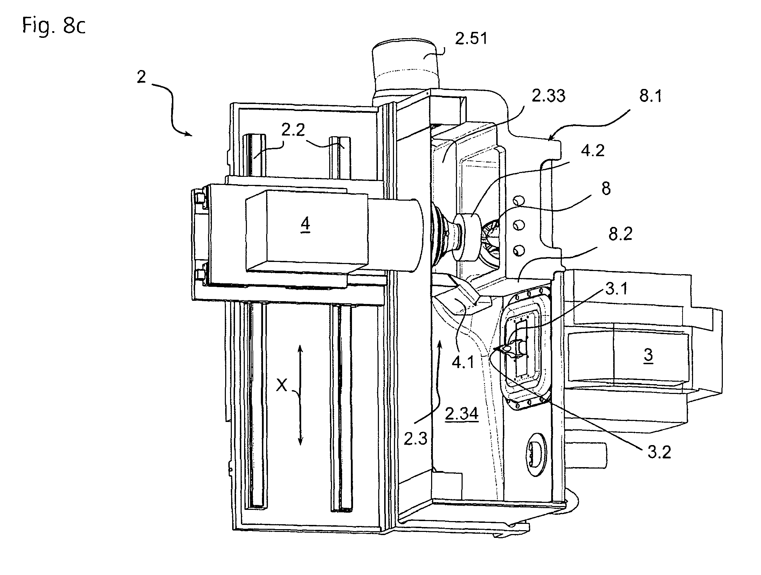

Gemäß Darstellung Figur 8c befindet sich die Werkstückspindel 4 in einer dritten Position unmittelbar gegenüberliegend zur Frässpindel 8. In dieser Position wird ebenso wie beim Drehmeißel 3.2 die vordere Fläche des Werkstücks 4.2 bearbeitet. Die Frässpindel 8 dreht sich dabei mit Bezug zu Figur 8c im Uhrzeigersinn, sodass der damit entstehende Spanflug vornehmlich nach hinten hin zur nicht dargestellten Auslauföffnung 2.5 erfolgt. Damit das Abschirmteil 4.1 beim Bewegen der Werkstückspindel 4 in Richtung der Bewegungsachse X nicht mit dem Drehmeißel 3.2 kollidiert, weist dieses eine begrenzte Länge auf. In der hier dargestellten dritten Position ist das Abschirmteil 4.1 unmittelbar im Bereich einer Abschirmwand 8.2 eines Lagerteils 8.1 für die Frässpindel 8 platziert. Das Abschirmteil 4.1 und die Abschirmwand 8.2 schotten die Frässpindel 8 und das Werkstück 4.2 bzw. den hinteren Teil des Spanraums 2.3 gegenüber dem vorderen Teil des Spanraums 2.3 zumindest in Richtung der Bewegungsachse X ab. Das Lagerteil 8.1 ist dabei fest mit dem Maschinenbett 2 verschraubt.

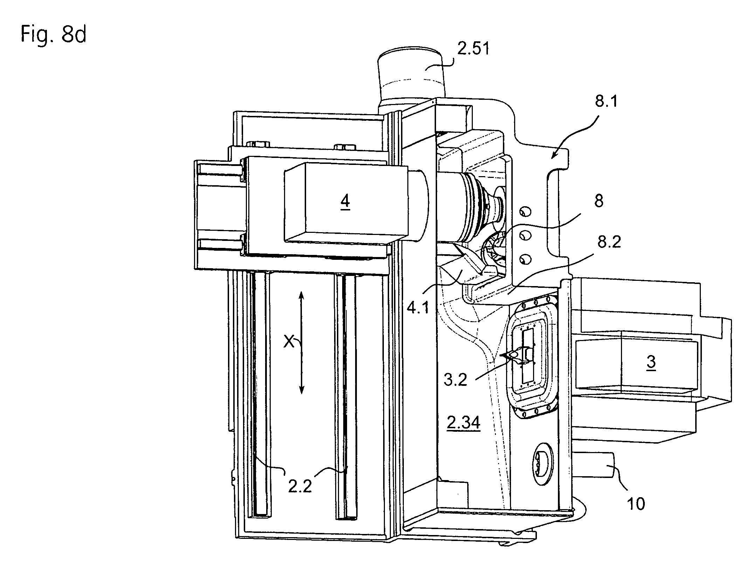

In der Darstellung gemäß Figur 8d befindet sich die Werkstückspindel 4 mit Bezug zur Bewegungsachse X hinter der Frässpindel 8, zwecks Bearbeitung der Randfläche des Werkstücks 4.2. Das Abschirmteil 4.1 bildet zusammen mit der Abschirmwand 8.2 die Abschottung gegenüber dem vorderen Teil des Spanraums 2.3.

Ausgehend von der Kühl- und Schmiermittelleitung 10 sind nicht weiter dargestellte Justierdüsen vorgesehen, mittels denen das Kühl- und Schmiermittel unmittelbar in den Bereich des Drehmeißels 3.2 geführt wird.

### Bezugszeichenliste

- 1: Drehmaschine, Dreh- und Fräsmaschine
- 2: Maschinenbett, Maschinenbettkörper
- 2.1: Lagerfläche
- 2.2: Lagerfläche
- 2.3: Spanraum
- 2.31: Wand, Seitenwand, hintere Wand
- 2.32: Wand, Seitenwand, linke Wand
- 2.33: Wand, Seitenwand, rechte Wand
- 2.34: Wand, Bodenwand
- 2.41: Lagerstelle
- 2.42: Lagerstelle
- 2.43: Lagerstelle
- 2.5: Auslauföffnung
- 2.51: Ablaufrohr
- 2.52: Ablauf
- 2.53: Kanalwand
- 2.7: Unterkante
- 2.81: Querrippe
- 2.82: Querrippe
- 2.83: Längsrippe
- 2.84: Diagonalrippe
- 2.85: Diagonalrippe
- 2.86: Diagonalrippe
- 2.87: Diagonalrippe
- 2.88: Diagonalrippe
- 2.89: Diagonalrippe
- 2.91: rechte Seitenwand
- 2.92: linke Seitenwand
- 2.93: vordere Seitenwand
- 2.94: hintere Seitenwand
- 3: Linearmotor
- 3.1: Drehwerkzeugaufnahme
- 3.2: Drehmeißel
- 4: Werkstückspindel
- 4.1: Abschirmteil
- 4.2: Werkstück
- 4.3: Abschirmrollo
- 4.31: Rollo-Mechanismus
- 4.32: Rollo-Mechanismus
- 4.4: erstes Axiallager
- 4.5: zweites Axiallager
- 5: Maschinengestell
- 5.1: Stützplatte
- 5.2: Bodenplatte
- 5.31: Stützteil
- 5.32: Stützteil
- 5.33: Stützteil
- 5.34: Stützteil
- 5.41: Aufstellfuß
- 5.42: Aufstellfuß
- 5.43: Aufstellfuß
- 5.44: Aufstellfuß
- 6.1: Dämpfungslager
- 6.2: Dämpfungslager
- 6.3: Dämpfungslager
- 7: Verkleidung
- 7.1: Zugangsöffnung
- 7.2: Unterkante, Vorderkante
- 7.3: Deckel
- 7.4: Aussparung
- 7.5: Wartungsklappe
- 7.6: hintere Kante
- 7.7: Glasschott
- 8: Frässpindel
- 8.1: Lagerteil
- 8.2: Abschirmwand
- 9: Schaltschrank
- 10: Mittel, Kühlflüssigkeitsleitung
- 11: Bedienpanel
- b1: Breite Maschinenbett, Wert
- b2: Breite Deckel
- C: Drehachse
- E: Aufstandsebene
- l: Länge
- m1: Masse Maschinenbett
- m2: Masse bewegt
- m3: Masse gesamt
- P: Bedienerposition
- Q: Quotient, Verhältnis
- R: Richtung
- S: Spindelachse
- t1: Tiefe Drehmaschine, Wert
- t2: Tiefe Deckel
- v1: Wert, Versatz
- v2: Wert, Versatz
- v3: Wert, Versatz, Höhe
- v4: Wert, Versatz
- v4': Wert, Versatz
- W: Translationsachse
- X: Bewegungsachse
- Z: Oszillationsachse
- α: Winkel
- β: Winkel

## Patentansprüche

1. Drehmaschine (1) zum Herstellen von nicht rotationssymmetrischen Oberflächen von Brillengläsern aus Kunststoff, aufweisend eine Aufstandsebene (E), ein Maschinenbett (2) mit einer Breite b1, einen Linearmotor (3) mit einem eine Drehwerkzeugaufnahme (3.1) aufweisenden Aktor mit einer Oszillationsachse Z, eine Werkstückspindel (4) mit einer Drehachse C und einer Bewegungsachse X, wobei das Maschinenbett (2) mindestens zwei mit Abstand angeordnete Lagerflächen (2.1, 2.2) für den Linearmotor (3) und für die Werkstückspindel (4) aufweist, und zwischen den beiden Lagerflächen (2.1, 2.2) ein Spanraum (2.3) vorgesehen ist, der zumindest teilweise durch das Maschinenbett (2) begrenzt ist, wobei der Linearmotor (3) an der ersten Lagerfläche (2.1) und die Werkstückspindel (4) mit Bezug zum Spanraum (2.3) gegenüberliegend zum Linearmotor (3) an der zweiten Lagerflächen (2.2) gelagert ist,
**dadurch gekennzeichnet,**
**dass** die Masse des Maschinenbetts (2) den Wert m1 aufweist, wobei der Wert m1 zwischen 100 kg und 500 kg oder zwischen 150 kg und 300 kg oder zwischen 170 kg und 200 kg oder 180 kg beträgt und dass das Maschinenbett (2) als ein nach unten offenes Gussbett ausgebildet ist, das mehrere in Richtung der Oszillationsachse Z verlaufende Querrippen (2.81, 2.82) und/oder mindestens eine in Richtung der Bewegungsachse X verlaufende Längsrippe (2.83) aufweist, wobei sich die Querrippen (2.81, 2.82) zwischen der Lagerfläche (2.1) für den Linearmotor (3) und der Lagerfläche (2.2) für die Werkstückspindel (4) erstrecken.

2. Drehmaschine (1) zum Herstellen von nicht rotationssymmetrischen Oberflächen von Brillengläsern aus Kunststoff, aufweisend eine Aufstandsebene (E), ein Maschinenbett (2) mit einer Breite b1 und einer Masse m1, einen Linearmotor (3) mit einem eine Drehwerkzeugaufnahme (3.1) aufweisenden Aktor mit einer Oszillationsachse Z, eine Werkstückspindel (4) mit einer Drehachse C und einer Bewegungsachse X, wobei das Maschinenbett (2) mindestens zwei mit Abstand angeordnete Lagerflächen (2.1, 2.2) für den Linearmotor (3) und für die Werkstückspindel (4) aufweist und zwischen den beiden Lagerflächen (2.1, 2.2) ein Spanraum (2.3) vorgesehen ist, der zumindest teilweise durch das Maschinenbett (2) begrenzt ist, wobei der Linearmotor (3) an der ersten Lagerfläche (2.1) und die Werkstückspindel (4) mit Bezug zum Spanraum (2.3) gegenüberliegend zum Linearmotor (3) an der zweiten Lagerfläche (2.2) gelagert ist,
**dadurch gekennzeichnet ,**
**dass** das Verhältnis **einer bewegten** Masse **m2 des Linearmotors (3)** zu **der** Masse **m1 des Maschinenbetts (2)** ein Quotient Q ist, wobei der Quotient Q zwischen 1:500 und 1:20 oder zwischen 1:60 und 1:30 oder zwischen 1:140 und 1:100 oder 1:40 oder 1:120 ist und dass das Maschinenbett (2) als ein nach unten offenes Gussbett ausgebildet ist, das mehrere in Richtung der Oszillationsachse Z verlaufende Querrippen (2.81, 2.82) und/oder mindestens eine in Richtung der Bewegungsachse X verlaufende Längsrippe (2.83) aufweist, wobei sich die Querrippen (2.81, 2.82) zwischen der Lagerfläche (2.1) für den Linearmotor (3) und der Lagerfläche (2.2) für die Werkstückspindel (4) erstrecken.

3. Drehmaschine (1) nach einem der vorhergehenden Ansprüche,
**dadurch gekennzeichnet,**
**dass** das Maschinenbett (2) zwei in Richtung der Bewegungsachse X verlaufende **als Maschinenbettwand ausgebildete** Längsrippen (2.**93, 2.91**) aufweist.

4. Drehmaschine (1) nach Anspruch 3,
**dadurch gekennzeichnet,**
**dass** die Querrippe (2.81, 2.82) im Bereich der Lagerfläche (2.1) für den Linearmotor (3) über mindestens 50 % bis 90 % der Höhe des Maschinenbetts (2) ausgebildet ist, wobei die Lagerfläche (2.1) für den Linearmotor (3) mit Bezug zu einer Länge l des Spanraums (2.3) in der Hälfte des Maschinenbetts (2) angeordnet ist, in der der Spanraum (2.3), der eine abfallende Bodenwand (2.34) aufweist, eine geringere Tiefe aufweist.

5. Drehmaschine (1) nach einem der vorhergehenden Ansprüche,
**dadurch gekennzeichnet,**
**dass** das Maschinenbett (2) höchstens drei Lagerstellen (2.41, 2.42, 2.43) aufweist, wobei mindestens eine erste Lagerstelle (2.41) unterhalb der Lagerfläche (2.1) für den Linearmotor (3) vorgesehen ist.

6. Drehmaschine (1) nach Anspruch 5,
**dadurch gekennzeichnet,**
**dass** die zweite und eine dritte Lagerstelle (2.42, 2.43) unterhalb der Lagerfläche (2.2) für die Werkstückspindel (4) an einem vorderen und an einem hinteren Ende des Maschinenbetts (2) vorgesehen sind.

7. Drehmaschine (1) nach Anspruch 5 oder 6,
**dadurch gekennzeichnet,**
**dass** die Lagerstelle (2.41, 2.42, 2.43) mit Bezug zu der Unterkante (2.7) des Maschinenbetts (2) einen vertikalen Versatz v4, v4' aufweist, der mindestens 20 mm bis 70 mm beträgt.

8. Drehmaschine (1) nach einem der vorhergehenden Ansprüche,
**dadurch gekennzeichnet,**
**dass** das Maschinenbett (2) eine Unterkante (2.7) aufweist und zwischen der Unterkante (2.7) und der Lagerfläche (2.1, 2.2) ein vertikaler Versatz mit dem maximalen Wert v3 vorgesehen ist, wobei der Wert v3 zwischen 100 mm und 300 mm, zwischen 150 mm und 250 mm oder 200 mm groß ist.

9. Drehmaschine (1) nach einem der vorhergehenden Ansprüche,
**dadurch gekennzeichnet,**
**dass** die Drehmaschine (1) mit Bezug zu einer Bedienerposition (P) eine Tiefe mit dem maximalen Wert t1 aufweist und der Wert t1 zwischen 800 mm und 1050 mm, zwischen 850 mm und 980 mm, zwischen 870 mm und 950 mm oder 930 mm groß ist.

10. Drehmaschine (1) nach einem der vorhergehenden Ansprüche,
**dadurch gekennzeichnet,**
**dass** das Maschinenbett (2) mit Bezug zu der Bedienerposition (P) die Breite mit einem maximalen Wert b1 aufweist und der Wert b1 zwischen 500 mm und 900 mm, zwischen 600 mm und 800 mm oder 680 mm groß ist.

11. Drehmaschine (1) nach einem der vorhergehenden Ansprüche,
**dadurch gekennzeichnet,**
**dass** die Drehachse C der Werkstückspindel (4) mit Bezug zu der Aufstandsebene (E) der Drehmaschine (1) einen vertikalen Versatz aufweist, der maximal den Wert v1 hat, wobei der Wert v1 zwischen 600 mm und 1050 mm, zwischen 700 mm und 900 mm oder 830 mm groß ist.

12. Drehmaschine (1) nach Anspruch 13,
**dadurch gekennzeichnet,**
**dass** der Spanraum (2.3) zu einer Seite durch mindestens eine gegenüber der Horizontalen angestellte Wand (2.31) des Maschinenbetts (2) begrenzt ist, in der die Auslauföffnung (2.5) vorgesehen ist, wobei die Auslauföffnung (2.5) des Spanraums (2.3) derart angeordnet ist, dass das zu transportierende Medium den Spanraum (2.3) zu einer Seite hin verlässt.

13. Drehmaschine (1) nach einem der vorhergehenden Ansprüche,
**dadurch gekennzeichnet,**
**dass** eine Verkleidung (7) mit einer Zugangsöffnung (7.1) vorgesehen ist, die einen regelmäßigen manuellen Werkstück-, Werkzeug- und Motorwechsel gewährleistet und die eine Kante (7.2) aufweist, wobei die Kante (7.2) mit Bezug zu der Aufstandsebene (E) einen maximalen vertikalen Versatz aufweist, der maximal den Wert v2 hat, wobei der Wert v2 zwischen 900 mm und 1200 mm, zwischen 950 mm und 1100 mm oder 1030 mm groß ist.

14. Drehmaschine (1) nach einem der vorhergehenden Ansprüche,
**dadurch gekennzeichnet,**
**dass** ein Schaltschrank (9) vorgesehen ist, der mit Bezug zu der Bedienerposition (P) links oder rechts vom Maschinenbett (2) angeordnet ist.

15. Drehmaschine (1) nach einem der vorhergehenden Ansprüche,
**dadurch gekennzeichnet,**
**dass** in der funktionsfähigen Ausführung eine Gesamtmasse mit dem maximalen Wert m3 vorgesehen ist, wobei der Wert m3 zwischen 500 kg und 1000 kg, zwischen 600 kg und 800 kg, zwischen 670 kg und 780 kg oder 750 kg beträgt.

## Claims

1. Lathe (1) for manufacturing non-rotationally symmetrical surfaces of spectacle lenses made of plastic, comprising a contact plane (E), a machine bed (2) with a width b1, a linear motor (3) with an actuator comprising a lathe tool holder (3.1) and having an oscillation axis Z, a workpiece spindle (4) with a rotational axis C and an axis of movement X, wherein the machine bed (2) comprises at least two bearing surfaces (2.1, 2.2) for the linear motor (3) and for the workpiece spindle (4), said bearing surfaces being spaced apart from one another, and between the two bearing surfaces (2.1, 2.2) a chip space (2.3) is provided which is at least partially delimited by the machine bed (2), wherein the linear motor (3) is supported at the first bearing surface (2.1) and the workpiece spindle (4) is supported at the second bearing surface (2.2) opposite the linear motor (3) with respect to the chip space (2.3),
**characterized in that**
the mass of the machine bed (2) has the value m1, wherein the value m1 is between 100 kg and 500 kg or between 150 kg and 300 kg or between 170 kg and 200 kg or 180 kg, and the machine bed (2) is designed as a cast bed open at the bottom which comprises multiple cross ribs (2.81, 2.82) running in the direction of the oscillation axis Z and/or at least one longitudinal rib (2.83) running in the direction of the axis of movement X, wherein the cross ribs (2.81, 2.82) extend between the bearing surface (2.1) for the linear motor (3) and the bearing surface (2.2) for the workpiece spindle (4).

2. Lathe (1) for manufacturing non-rotationally symmetrical surfaces of spectacle lenses made of plastic, comprising a contact plane (E), a machine bed (2) with a width b1 and a mass m1, a linear motor (3) with an actuator comprising a lathe tool holder (3.1) and having an oscillation axis Z, a workpiece spindle (4) with a rotational axis C and an axis of movement X, wherein the machine bed (2) comprises at least two bearing surfaces (2.1, 2.2) for the linear motor (3) and for the workpiece spindle (4), said bearing surfaces being spaced apart from one another, and between the two bearing surfaces (2.1, 2.2) a chip space (2.3) is provided which is at least partially delimited by the machine bed (2), wherein the linear motor (3) is supported at the first bearing surface (2.1) and the workpiece spindle (4) is supported at the second bearing surface (2.2) opposite the linear motor (3) with respect to the chip space (2.3),
**characterized in that**
the ratio of a moving mass m2 of the linear motor (3) and the mass m1 of the machine bed (2) is a quotient Q, wherein the quotient Q is between 1:500 and 1:20 or between 1:60 and 1:30 or between 1:140 and 1:100 or 1:40 or 1:120, and the machine bed (2) is designed as a cast bed open at the bottom which comprises multiple cross ribs (2.81, 2.82) running in the direction of the oscillation axis Z and/or at least one longitudinal rib (2.83) running in the direction of the axis of movement X, wherein the cross ribs (2.81, 2.82) extend between the bearing surface (2.1) for the linear motor (3) and the bearing surface (2.2) for the workpiece spindle (4).

3. Lathe (1) according to any one of the preceding claims,
**characterized in that**
the machine bed (2) comprises two longitudinal ribs (2.93, 2.91) running in the direction of the axis of movement X and being designed as machine bed walls.

4. Lathe (1) according to claim 3,
**characterized in that**
the cross rib (2.81, 2.82) is formed over at least 50 % to 90 % of the height of the machine bed (2) in the region of the bearing surface (2.1) for the linear motor (3), wherein the bearing surface (2.1) for the linear motor (3) is, with respect to a length l of the chip space (2.3), arranged **in that** half of the machine bed (2) where the chip space (2.3) having a sloping bottom wall (2.34) has a smaller depth.

5. Lathe (1) according to any one of the preceding claims,
**characterized in that**
the machine bed (2) comprises a maximum of three bearing points (2.41, 2.42, 2.43), wherein at least one first bearing point (2.41) is provided beneath the bearing surface (2.1) for the linear motor (3).

6. Lathe (1) according to claim 5,
**characterized in that**
the second and a third bearing point (2.42, 2.43) are provided beneath the bearing surface (2.2) for the workpiece spindle (4) at a front and at a rear end of the machine bed (2).

7. Lathe (1) according to claim 5 or 6,
**characterized in that**
the bearing point (2.41, 2.42, 2.43) has a vertical offset v4, v4' with respect to the lower edge (2.7) of the machine bed (2), said vertical offset being at least 20 mm to 70 mm.

8. Lathe (1) according to any one of the preceding claims,
**characterized in that**
the machine bed (2) has a lower edge (2.7), and between the lower edge (2.7) and the bearing surface (2.1, 2.2) a vertical offset with the maximum value v3 is provided, wherein the value v3 is between 100 mm and 300 mm, between 150 mm and 250 mm or 200 mm.

9. Lathe (1) according to any one of the preceding claims,
**characterized in that**
the lathe (1), with respect to an operator position (P), has a depth with the maximum value t1, and the value t1 is between 800 mm and 1050 mm, between 850 mm and 980 mm, between 870 mm and 950 mm or 930 mm.

10. Lathe (1) according to any one of the preceding claims,
**characterized in that**
the machine bed (2), with respect to the operator position (P), has the width with a maximum value b1, and the value b1 is between 500 mm and 900 mm, between 600 mm and 800 mm or 680 mm.

11. Lathe (1) according to any one of the preceding claims,
**characterized in that**
the rotational axis C of the workpiece spindle (4) has a vertical offset with respect to the contact plane (E) of the lathe (1), said vertical offset having at maximum the value v1, wherein the value v1 is between 600 mm and 1050 mm, between 700 mm and 900 mm or 830 mm.

12. Lathe (1) according claim 13,
**characterized in that**
the chip space (2.3) is delimited on one side by at least one wall (2.31) of the machine bed (2), said wall being inclined with respect to the horizontal and having the discharge opening (2.5) provided therein, wherein the discharge opening (2.5) of the chip space (2.3) is arranged such that the medium to be transported leaves the chip space (2.3) on one side.

13. Lathe (1) according to any one of the preceding claims,
**characterized in that**
a covering (7) is provided having an access opening (7.1) which ensures a regular manual replacement of the workpiece, tool and motor and which has an edge (7.2), wherein the edge (7.2) has a maximum vertical offset with respect to the contact plane (E), said maximum vertical offset having at maximum the value v2, wherein the value v2 is between 900 mm and 1200 mm, between 950 mm and 1100 mm or 1030 mm.

14. Lathe (1) according to any one of the preceding claims,
**characterized in that**
a switch cabinet (9) is provided which is arranged to the left or to the right of the machine bed (2) with respect to the operator position (P).

15. Lathe (1) according to any one of the preceding claims,
**characterized in that**
in the working embodiment a total mass with the maximum value m3 is provided, wherein the value m3 is between 500 kg and 1000 kg, between 600 kg and 800 kg, between 670 kg and 780 kg or 750 kg.

## Revendications

1. Tour (1) pour la fabrication de surfaces, non symétriques en rotation, de verres de lunettes en matériau organique, présentant un plan d'appui (E), un banc de machine (2) avec une largeur b1, un moteur linéaire (3) avec un acteur présentant un logement d'outil de tournage (3.1) avec un axe d'oscillation Z, une broche d'outil (4) avec un axe de rotation C et un axe de déplacement X, le banc de machine (2) présentant au moins deux surfaces d'appui (2.1, 2.2) disposées de façon espacée pour le moteur linéaire (3) et pour la broche d'outil (4), et un logement de copeaux (2.3) étant prévu entre les deux surfaces d'appui (2.1, 2.2) qui est limité au moins partiellement par le banc de machine (2), le moteur linéaire (3) étant supporté sur la première surface d'appui (2.1), et la broche d'outil (4) étant supportée sur la deuxième surface d'appui (2.2) en face du moteur linéaire (3) par rapport au logement de copeaux (2.3),
**caractérisé en ce que**
la masse du banc de machine (2) présente la valeur m1, la valeur m1 se situant entre 100 kg et 500 kg ou entre 150 kg et 300 kg ou entre 170 kg et 200 kg ou est égale à 180 kg, et **en ce que** le banc de machine (2) est constitué en tant que banc en fonte ouvert vers le bas qui présente plusieurs nervures transversales (2.81, 2.82) agencées dans la direction de l'axe d'oscillation Z et/ou au moins une nervure longitudinale (2.83) agencée dans la direction de l'axe de déplacement X, les nervures transversales (2.81, 2.82) s'étendant entre la surface d'appui (2.1) pour le moteur linéaire (3) et la surface d'appui (2.2) pour la broche d'outil (4).

2. Tour (1) pour la fabrication de surfaces, non symétriques en rotation, de verres de lunettes en matériau organique, présentant un plan d'appui (E), un banc de machine (2) avec une largeur b1 et une masse m1, un moteur linéaire (3) avec un acteur présentant un logement d'outil de tournage (3.1) avec un axe d'oscillation Z, une broche d'outil (4) avec un axe de rotation C et un axe de déplacement X, le banc de machine (2) présentant au moins deux surfaces d'appui (2.1, 2.2) disposées de façon espacée pour le moteur linéaire (3) et pour la broche d'outil (4), et un logement de copeaux (2.3) étant prévu entre les deux surfaces d'appui (2.1, 2.2) qui est limité au moins partiellement par le banc de machine (2), le moteur linéaire (3) étant supporté sur la première surface d'appui (2.1), et la broche d'outil (4) étant supportée sur la deuxième surface d'appui (2.2) en face du moteur linéaire (3) par rapport au logement de copeaux (2.3),
**caractérisé en ce que**
le rapport d'une masse m2 déplacée du moteur linéaire (3) à la masse m1 du banc de machine (2) est un quotient Q, le quotient Q étant compris entre 1:500 et 1:20 ou 1:60 et 1:30 ou 1:140 et 1:100 ou 1:40 ou 1:120, et **en ce que** le banc de machine (2) est constitué en tant que banc en fonte ouvert vers le bas qui présente plusieurs nervures transversales (2.81, 2.82) agencées dans la direction de l'axe d'oscillation Z et/ou au moins une nervure longitudinale (2.83) agencée dans la direction de l'axe de déplacement X, les nervures transversales (2.81, 2.82) s'étendant entre la surface d'appui (2.1) pour le moteur linéaire (3) et la surface d'appui (2.2) pour la broche d'outil (4).

3. Tour (1) selon une des revendications précédentes,
**caractérisé en ce que**
le banc de machine (2) présente deux nervures longitudinales (2.93, 2.91) agencées dans la direction de l'axe de déplacement X constituées en tant que paroi de banc de machine.

4. Tour (1) selon la revendication 3,
**caractérisé en ce que**
la nervure transversale (2.81, 2.82) est, dans la zone de la surface d'appui (2.1) pour le moteur linéaire (3), constituée sur au moins 50 % à 90 % de la hauteur du banc de machine (2), la surface d'appui (2.1) pour le moteur linéaire (3) étant, par rapport à une longueur 1 du logement de copeaux (2.3), disposée dans la moitié du banc de machine (2) dans laquelle le logement de copeaux (2.3), qui présente une paroi de fond (2.34) en pente, présente une moindre profondeur.

5. Tour (1) selon une des revendications précédentes,
**caractérisé en ce que**
le banc de machine (2) présente au maximum trois emplacement d'appui (2.41, 2.42, 2.43), au moins un premier emplacement d'appui (2.41) étant prévu au-dessous de la surface d'appui (2.1) pour le moteur linéaire (3).

6. Tour (1) selon la revendication 5,
**caractérisé en ce que**
le deuxième et un troisième emplacement d'appui (2.42, 2.43) sont prévus au-dessous de la surface d'appui (2.2) pour la broche d'outil (4) à une extrémité avant et à une extrémité arrière du banc de machine (2).

7. Tour (1) selon la revendication 5 ou 6,
**caractérisé en ce que**
l'emplacement d'appui (2.41, 2.42, 2.43) présente, par rapport à l'arête inférieure (2.7) du banc de machine (2), un décalage vertical v4, v4' qui est d'au moins 20 mm à 70 mm.

8. Tour (1) selon une des revendications précédentes,
**caractérisé en ce que**
le banc de machine (2) présente une arête inférieure (2.7) et **en ce que**, entre l'arête inférieure (2.7) et la surface d'appui (2.1, 2.2), il est prévu un décalage vertical ayant la valeur maximale v3, la valeur v3 étant comprise entre 100 mm et 300 mm, entre 150 mm et 250 mm ou étant égale à 200 mm.

9. Tour (1) selon une des revendications précédentes,
**caractérisé en ce que**,
par rapport à une position d'opérateur (P), le tour (1) présente une profondeur ayant la valeur maximale t1, et **en ce que** la valeur t1 est comprise entre 800 mm et 1050 mm, entre 850 mm et 980 mm, entre 870 mm et 950 m ou est égale à 930 mm.

10. Tour (1) selon une des revendications précédentes,
**caractérisé en ce que**,
par rapport à la position d'opérateur (P), le banc de machine (2) présente la largeur ayant une valeur maximale b1, et **en ce que** la valeur b1 est comprise entre 500 mm et 900 mm, entre 600 mm et 800 mm ou est égale à 680 mm.

11. Tour (1) selon une des revendications précédentes,
**caractérisé en ce que**,
par rapport au plan d'appui (E) du tour (1), l'axe de rotation C de la broche d'outil (4) présente un décalage vertical qui a au maximum la valeur v1, la valeur v1 étant
comprise entre 600 mm et 1050 mm, entre 700 mm et 900 mm, ou étant égale à 830 mm.

12. Tour (1) selon la revendication 13,
**caractérisé en ce que**
le logement de copeaux (2.3) est, d'un côté, limité par au moins une paroi (2.31) du banc de machine (2) placée par rapport à l'horizontale, paroi dans laquelle est prévue l'ouverture de sortie (2.5), l'ouverture de sortie (2.5) du logement de copeaux (2.3) étant disposée de sorte que l'agent à transporter quitte le logement de copeaux (2.3) en direction d'un côté.

13. Tour (1) selon une des revendications précédentes,
**caractérisé en ce**
**qu'**il est prévu un habillage (7) avec une ouverture d'accès (7.1) qui garantit un remplacement manuel régulier de la pièce, de l'outil et du moteur, et qui présente une arête (7.2), l'arête (7.2) présentant par rapport au plan d'appui (E) un décalage vertical maximal qui a au maximum la valeur v2, la valeur v2 étant comprise entre 900 mm et 1200 mm, entre 950 mm et 1100 mm ou étant égale à 1030 mm.

14. Tour (1) selon une des revendications précédentes,
**caractérisé en ce**
**qu'**il est prévu une armoire de commande (9) qui, par rapport à la position d'opérateur (P), est disposée à gauche ou à droite du banc de machine (2).

15. Tour (1) selon une des revendications précédentes,
**caractérisé en ce que**,
dans l'exécution opérationnelle, il est prévu une masse totale ayant la valeur maximale m3, la valeur m3 étant
comprise entre 500 kg et 1000 kg, entre 600 kg et 800 kg, entre 670 kg et 780 kg ou étant égale à 750 kg.
